# EUROPÄISCHE PATENTSCHRIFT

(11) **EP 2 632 654 B1**
(45) Veröffentlichungstag und Bekanntmachung des Hinweises auf die Patenterteilung: **10.06.2015**
(21) Anmeldenummer: 11772988.9
(22) Anmeldetag: 21.10.2011
(51) Int. Cl.: B25J 15/00, B25J 15/06

(54) **WANDELBARES ANPASSUNGSFÄHIGES GREIFERSYSTEM**
CONVERTIBLE ADAPTIVE GRIPPER SYSTEM
CONVERTIBLES SYSTÈME DE PRÉHENSION ADAPTATIVE

(30) Priorität: 28.10.2010 DE 102010043036
(43) Veröffentlichungstag der Anmeldung: 04.09.2013
(73) Patentinhaber: Fraunhofer-Gesellschaft zur Förderung der angewandten Forschung e.V., 80686 München (DE)
(72) Erfinder: GRAUPNER, Robert, 86199 Augsburg (DE); DRECHSLER, Klaus, 83620 Feldkirchen (DE); SCHMITT, Stefan, 86199 Augsburg (DE); WÖLLING, Jakob, 86150 Augsburg (DE)
(74) Vertreter: Maiwald Patentanwalts GmbH
(86) Internationale Anmeldenummer: PCT/EP2011/068465
(87) Internationale Veröffentlichungsnummer: WO 2012/055788

(56) Entgegenhaltungen:
- EP-A1- 1 321 966
- DE-A1- 4 136 638
- DE-A1- 10 304 169
- DE-C1- 10 224 598
- US-A- 4 582 353

## Beschreibung

Faserverstärkte Kunststoffe haben sich bereits in vielen technischen Bereichen etabliert, unter anderem als Leichtbauwerkstoff, der gegenüber der klassischen Metallbauweise Gewicht in einer Größenordnung von 30% einsparen kann. Gerade im Luftfahrtbereich ist CFK (Kohlenstofffaserverstärkter Kunststoff) weit verbreitet. Ein wesentlicher Grund, der eine noch stärkere Verbreitung verhindert, liegt in den noch vergleichsweise hohen Herstellkosten. Diese wiederum werden durch einen nicht zu vernachlässigenden Anteil an noch nicht automatisierten Handarbeitsschritten beim so genannten Handling der Fasern (Zuschnitt, Preforming, Umformen, Drapieren) verursacht.

Gegenwärtig sind verschiedene Ansätze bekannt, um das Faser-Handling zu automatisieren. In diesem Zusammenhang können z.B. folgende Ansätze genannt werden:
- Fiber Patch Preforming (Nachteil: sehr geringe Ablegeraten).
- Roboterunterstütztes Ablegen von multiaxialem Gewebe (MAG) und anderen großflächigen Halbzeugen mit höheren Ablegeraten: Anbringen eines Werkzeugs (so genannte Endeffektoren) an einem handelsüblichen Roboter (Vorteilhafte Flexibilität eines 6-Achs-Knickarmroboters gegenüber einer Portalanlage) und Aufnehmen des zugeschnittenen, ebenen Halbzeugs und Ablegen in einer Form. Die eigentliche Fixierung des Halbzeugs in dem Endeffektor erfolgt über Vakuum-, Nadel-, oder Eisgreifer.

Je nach Komplexität der Form, in die abgelegt werden soll, kommen dabei unterschiedliche Vorgehensweisen zum Einsatz. Einfach gekrümmte Flächen können mittels rollender Bewegung eines zylindrischen Endeffektors bedient werden. Dies funktioniert jedoch nur bei einfachen Geometrien. Bei komplexeren Geometrien muss mit starren Aufnehmern gearbeitet werden, die für jedes Halbzeug und/oder Bauteil und für jeden Ablegeschritt angepasst sein müssen. Dies ist gerade bei den im CFK-Bereich üblichen kleinen Losgrößen ein Problem, da so zusätzlicher Investitions- und Entwicklungsbedarf bei Produktionsbeginn neuer Bauteile anfällt. Insbesondere beim Zusammenbau von Preforms aus teilweise vorstabilisierten Faserzuschnitten müssen die Greifer-Geometrien sehr genau an das Halbzeug und/oder Bauteil angepasst sein. Als Beispiele hierfür lassen sich lokale Verstärkungen von Krafteinleitungselementen in Löcher anbringen oder die Drapierung eines Fensterrahmens an einer Rumpfschale.

Für bestimmte Anwendungen kann es auch erwünscht sein, dass sich ein Halbzeug oder Bauteil durch einen Endeffektor möglichst gleichmäßig über seine Oberfläche temperieren (erwärmen oder abkühlen) oder auch kompaktieren lässt.

In der EP 1 321 966 A1 werden Greifwerkzeuge zum Montieren von Halbleiterchips beschrieben. Diese enthalten ein Saugorgan aus elastisch deformierbarem Material, wobei die den Halbleiterchip aufnehmende Fläche konvex ausgebildet ist.

Die DE 41 36 638 A1 betrifft eine Saugnapfeinheit sowie ein Verfahren zu Ihrer Herstellung.

Unter Berücksichtigung der obigen Ausführungen besteht eine Aufgabe der vorliegenden Erfindung in der Bereitstellung eines Endeffektors, der für unterschiedlich geformte Halbzeuge bzw. Bauteile einsetzbar ist und diese Halbzeuge/Bauteile z.B. effizient greifen und passgenau in einer Form ablegen oder auch gleichmäßig temperieren oder kompaktieren kann. Eine weitere Aufgabe der vorliegenden Erfindung besteht in der Bereitstellung eines geeigneten Verfahrens unter Verwendung des erfindungsgemäßen Endeffektors.

Gemäß eines ersten Aspekts der vorliegenden Erfindung wird die Aufgabe gelöst durch die Bereitstellung eines Endeffektors, umfassend
- einen flexiblen Behälter, der einen Füllstoff enthält, wobei der Füllstoff zwischen einem fließfähigen oder verformbaren Zustand und einem starren oder formhaltigen Zustand schaltbar ist, und
- ein oder mehrere Arbeitselemente zum Greifen, Temperieren und/oder Kompaktieren,
dadurch gekennzeichnet, dass der Endeffektor zumindest ein Schaltelement umfasst, das an dem flexiblen Behälter angebracht oder in dessen Oberfläche eingelassen ist und das Schaltelement ausgewählt wird aus einer oder mehreren Vakuum- (4,5) und/oder Belüftungsleitungen, einem oder mehreren Heiz- oder Kühlelementen, Elektroden, oder Kombinationen dieser Schaltelemente.

Wie nachfolgend noch eingehender beschrieben wird, ermöglicht es der erfindungsgemäße Endeffektor, die Oberflächenkontur der Ablagefläche einer Form oder auch die Oberflächenkontur eines Bauteils oder Halbzeugs in dem flexiblen Behälter nachzubilden, indem der flexible Behälter gegen die Ablagefläche bzw. das Bauteil gepresst wird (d.h. Füllstoff in fließfähigem oder plastisch oder elastisch verformbaren Zustand) und anschließend diese im flexiblen Behälter nachgebildete Oberflächenkontur "einzufrieren" (Überführen des Füllstoffs in den starren bzw. formhaltigen Zustand). Anschließend kann z.B. ein mit Greiferelementen gegriffener Gegenstand wie z.B. ein textiles Gewebe oder ein Prepreg möglichst exakt auf der Ablagefläche der Form abgelegt werden. Soll der Endeffektor zu einem späteren Zeitpunkt für eine neue Ablagefläche mit anderer Oberflächenkontur eingesetzt werden, kann der Füllstoff wieder in einen fließfähigen bzw. elastisch oder plastisch verformbaren Zustand überführt werden, um die neue Oberflächenkontur nachzubilden, gefolgt von dem "Einfrieren" dieser nachgebildeten Oberflächenkontur, indem der Füllstoff wieder in den erstarrten Zustand geschaltet wird. Auch kann der Endeffektor nach dem "Einfrieren" der Oberflächenkontur eines Bauteils oder Halbzeugs dazu verwendet werden, dieses Bauteil bzw. Halbzeug möglichst gleichmäßig zu temperieren, z.B. durch Heizelemente, die auf der Oberfläche des flexiblen Behälters angebracht sind.

Der Begriff "Endeffektor" wird im Rahmen der vorliegenden Erfindung in seiner üblichen, dem Fachmann geläufigen Bedeutung verstanden und bezeichnet daher in der Robotik das letzte Element einer kinematischen Kette.

Unter "starr" oder "formhaltig" wird im Rahmen der vorliegenden Erfindung ein Zustand verstanden, in dem der Füllstoff unter Einwirkung der im Prozessablauf zu erwartenden äußeren Krafteinwirkungen (Schwerkraft und/oder Andrücken durch den Roboter in eine konturierte Form) nicht mehr in der Lage ist (d.h. nicht mehr ausreichend fließfähig ist), sich der Geometrie eines Behälters anzupassen.

Unter "fließfähig" oder "verformbar" (elastisch oder plastisch) wird im Rahmen der vorliegenden Erfindung ein Zustand verstanden, in dem der Füllstoff unter Einwirkung der im Prozessablauf zu erwartenden äußeren Krafteinwirkungen (Schwerkraft und/oder Andrücken durch den Roboter in eine konturierte Form) noch in der Lage ist, sich der Geometrie eines Behälters anzupassen.

Im Rahmen der vorliegenden Erfindung sind somit übliche Flüssigkeiten als fließfähig anzusehen. Weiterhin sind aber auch partikelförmige Feststoffe wie Pulver oder Feststoffkügelchen als fließfähig anzusehen, sofern die Wechselwirkungen zwischen den Partikeln (z.B. starkes Anhaften der Partikel/Kügelchen untereinander) nicht so ausgeprägt ist, dass eine Fließfähigkeit unterbunden wird.

Wie oben ausgeführt, wird der im flexiblen Behälter vorliegende Füllstoff aus solchen Materialien ausgewählt, die zwischen einem fließfähigen oder elastisch oder plastisch verformbaren Zustand und einem starren Zustand schaltbar sind. Diese Schaltbarkeit erlaubt eine Zustandsänderung in beide Richtungen, also z.B. von fließfähig zu starr und zu einem späteren Zeitpunkt wieder zurück zu fließfähig.

Die Überführung des Materials vom fließfähigen oder verformbaren Zustand in den starren oder formhaltigen Zustand (oder umgekehrt) wird durch eine geeignete äußere Einwirkung realisiert, z.B. durch Druckänderung wie Anlegen eines Vakuums, Temperaturänderung, Änderung des elektrischen Feldes wie z.B. durch Anlegen einer Spannung etc.

Geeignete Materialien, die zwischen einem fließfähigen und starren Zustand schaltbar sind, sowie geeignete äußere Parameter, deren Änderung den Übergang fließfähig→starr bzw. starr→fließfähig bewirken, sind dem Fachmann grundsätzlich bekannt.

In einer bevorzugten Ausführungsform handelt es sich bei dem Füllstoff um einen partikelförmigen Feststoff.

Dabei ist es bevorzugt, wenn der partikelförmige Feststoff eine geringe Dichte aufweist, im Normalzustand eine ausreichende Fließfähigkeit aufweist, sich somit problemlos unterschiedlichen Geometrien anpassen kann und beim Anlegen eines Vakuums an den flexiblen Behälter schnell in einen starren Zustand überführbar ist.

Bevorzugte partikelförmige Feststoffe, die diesen Anforderungen gerecht werden, sind z.B. Schaumstoffpartikel, insbesondere Schaumstoffkügelchen, d.h. Polymerkügelchen, die über ein Schäumverfahren hergestellt wurden.

Geeignete Schaumstoffkügelchen sind z.B. Styroporkügelchen.

Grobkörnige Feststoffe sind ebenfalls als Füllstoff geeignet.

In Abhängigkeit von der Oberflächenkontur, die mit dem flexiblen Behälter des Endeffektors nachgebildet werden soll (z.B. Grad der Oberflächenkrümmung etc.), kann der durchschnittliche Durchmesser der Schaumstoffkügelchen über einen breiten Bereich variieren.

Als partikelförmiger Füllstoff kann auch ein Pulver (z.B. ein grobkörniges Pulver) verwendet werden.

In einer alternativen bevorzugten Ausführungsform handelt es sich bei dem Füllstoff um eine Flüssigkeit, insbesondere eine elektroviskose Flüssigkeit.

Elektroviskose Flüssigkeiten sind dem Fachmann grundsätzlich bekannt. Im Allgemeinen liegen sie in der Form von Dispersionen von feinteiligen hydrophilen Feststoffen in hydrophoben Flüssigkeiten vor. Das Besondere dieser Flüssigkeiten besteht darin, dass sich ihr Fließverhalten und damit ihre Viskosität durch Anlegen eines elektrischen Feldes in weiten Grenzen ändern lässt. Beispielhafte Einsatzbereiche von elektroviskosen Flüssigkeiten liegen auf dem Gebiet der Industrie- und Fahrzeughydraulik, z.B. zur Maschinen- und Motorlagerung bzw. Dämpfung, zur Fahrzeug-Niveauregulierung, Fahrzeug-Federung und Fahrzeug-Dämpfung sowie für Drehmomentwandler und automatische Kupplungen.

In der Regel bestehen die elektroviskosen Flüssigkeiten aus drei Komponenten, einer dispersen Phase, die z.B. Silikate, Zeolithe, Titanate, Halbleiter, Polysaccharide oder organische Polymere enthält, einer elektrisch nicht leitenden hydrophoben Flüssigkeit als flüssige Phase sowie einem Dispergiermittel.

Alternativ kann auch eine Flüssigkeit, die durch Temperaturänderung zwischen einem fließfähigen und einem starren bzw. formhaltigen Zustand schaltbar ist, als Füllstoff verwendet werden. Der Begriff "Flüssigkeit" bezieht sich dann bevorzugt auf eine bei Raumtemperatur und Atmosphärendruck als Flüssigkeit vorliegende Substanz.

Die Flüssigkeit kann auch einen partikelförmigen Feststoff (beispielsweise Schaumstoffkügelchen wie Styroporkügelchen, magnetische Partikel etc.) enthalten, um unter anderem Gewichtsersparnisse oder die Funktionalität des Schaltens zwischen starr und flüssig zu erzielen.

Eine Kombination der oben genannten Füllstoffe ist ebenfalls möglich.

Wie bereits oben diskutiert, kann die reversible Schaltung zwischen fließfähigem und starrem Zustand durch entsprechende Änderung eines geeigneten äußeren Parameters wie Druck, Temperatur und/oder elektrisches Feld bewirkt werden.

Hierzu umfasst der Endeffektor zumindest ein Schaltelement, über den der äußere Parameter entsprechend verändert werden kann.

Als geeignete Schaltelemente werden z.B. ein oder mehrere Vakuum- bzw. Belüftungsleitungen, ein oder mehrere Heizelemente und/oder Elektroden verwendet. Diese sind an dem flexiblen Behälter angebracht bzw. in dessen Oberfläche eingelassen.

Über diese Schaltelemente können dann Parameter wie Druck, Temperatur oder elektrische Feldstärke in dem flexiblen Behälter so variiert werden, dass der Füllstoff vom fließfähigen in den starren bzw. vom starren in den fließfähigen Zustand überführt wird.

Je nach Art des Füllstoffs und der nachzubildenden Oberflächenkontur einer Ablagefläche kann der Befüllungsgrad des flexiblen Behälters über einen breiten Bereich variiert werden.

Als geeigneter Befüllungsgrad kann z.B. ein Bereich von 30 % bis 100% angegeben werden. Der flexible Behälter kann somit vollständig mit Füllstoff befüllt sein oder alternativ einen Befüllungsgrad < 100%, z.B. 30-90% aufweisen.

Ein geeigneter Parameter für die Zustandsänderung fließfähig→starr bzw. starr→fließfähig kann unter Kenntnis des jeweiligen Füllstoffs ausgewählt werden. Bei der Verwendung von partikelförmigem Feststoff, insbesondere Schaumstoffkügelchen wie z.B. Styroporkügelchen, als Füllstoff wird die Zustandsänderung des Füllstoffs bevorzugt durch eine Druckänderung bewirkt. Der Übergang fließfähig→starr wird bevorzugt durch das Anlegen eines Unterdrucks bzw. Vakuums an den flexiblen Behälter bewirkt, während der Übergang starr→fließfähig durch eine entsprechende Belüftung des flexiblen Behälters realisiert werden kann.

Die Füllmenge bzw. der Befüllungsgrad ist bevorzugt so gewählt, dass die Partikel bzw. Kügelchen untereinander beweglich und fließfähig bleiben und damit die Verformbarkeit des gesamten Behälters gegeben ist. Wird der flexible Behälter gegen eine beliebig geformte Kontur gedrückt, bildet er exakt diese Oberfläche ab. Wird nun in diesem Behälter ein Vakuum bzw. ein geeignet eingestellter Unterdruck gezogen, so werden die Partikel bzw. Kügelchen stark kompaktiert und verlieren ihren Bewegungsfreiraum. Das starke Kompaktieren bzw. das "Verkeilen" der Partikel/Kügelchen bewirkt schließlich, dass der Füllstoff in dem Behälter erstarrt und somit auch der Behälter selbst nicht mehr frei verformbar ist.

Bei der Verwendung von partikelförmigem Feststoff, insbesondere Schaumstoffkügelchen wie z.B. Styroporkügelchen, als Füllstoff ist es daher bevorzugt, dass zumindest eine Vakuum- bzw. Belüftungsleitung an dem flexiblen Behälter angebracht bzw. in dessen Oberfläche eingelassen ist. Diese Leitung ist mit einer Vakuumpumpe verbunden, um so einen ausreichenden Unterdruck oder ein Vakuum in dem flexiblen Behälter erzeugen zu können.

Bei der Verwendung einer elektroviskosen Flüssigkeit sind bevorzugt Elektroden zur Erzeugung eines elektrischen Feldes an dem flexiblen Behälter angebracht bzw. in dessen Oberfläche eingelassen. Die Elektroden sind mit einer Spannungsquelle verbunden und beim Anlegen einer geeigneten elektrischen Spannung wird so in dem flexiblen Behälter ein elektrisches Feld erzeugt, was zu einer entsprechenden Erstarrung der elektroviskosen Flüssigkeit führt.

Wird die Zustandsänderung fließfähig→starr bzw. starr→fließfähig durch eine Temperaturänderung in dem flexiblen Behälter bewirkt, sind bevorzugt Heizund/oder Kühlelemente an dem flexiblen Behälter angebracht bzw. in dessen Oberfläche eingelassen. In diesem Fall kann die Zustandsänderung z.B. dadurch bewirkt werden, dass der Füllstoff reversibel geschmolzen und kristallisiert werden kann. Durch Erwärmen auf eine Temperatur oberhalb des Schmelzpunktes wird der Füllstoff fließfähig gehalten, während ein Abkühlen auf eine Temperatur unterhalb Schmelzpunktes ein Erstarren (durch Kristallisation) des Füllstoffs bewirkt.

Wie oben ausgeführt, handelt es sich bei dem Behälter, in dem der schaltbare Füllstoff vorliegt, um einen flexiblen Behälter. Im Rahmen der vorliegenden Erfindung wird darunter ein Behälter mit einer flexiblen Wandung verstanden. Solche flexiblen Behälter bzw. Behälter mit flexibler Wandung sind dem Fachmann bekannt und kommen in einer Vielzahl unterschiedlicher Anwendungen zum Einsatz. Eine flexible Wandung kann durch die Auswahl geeigneter Wandungsmaterialien gewährleistet werden. Beispielhaft können hier textile Materialien, folien- oder membran-artige Materialien wie bspw.Vakuumfolie, Silikonmembran, "F111" Gewebe oder "ZERO P" oder Kombinationen dieser Materialien genannt werden.

Je nach Art des Füllstoffs und des Parameters, der die Zustandsänderung bewirkt, kann es erforderlich sein, dass das Material, aus dem der flexible Behälter gefertigt ist, bestimmte Anforderungen erfüllt. Wird z.B. die Zustandsänderung durch Anlegen eines Unterdrucks bzw. Vakuums bewirkt (bevorzugt bei der Verwendung von partikelförmigem Feststoff wie z.B. Schaumstoffkügelchen), so sollte der flexible Behälter eine möglichst gasdichte Wandung aufweisen. Ist der flexible Behälter mit einer Flüssigkeit als Füllstoff befüllt, sollte der flexible Behälter eine möglichst flüssigkeitsundurchlässige Wandung aufweisen. Geeignete flexible Materialien, die diesen Anforderungen genügen, sind dem Fachmann grundsätzlich bekannt.

Der mit dem Füllstoff befüllte flexible Behälter kann hinsichtlich seiner Form sehr variabel gestaltet sein. Wichtig ist, dass der Behälter eine ausreichende Flexibilität aufweist, so dass beim Aufdrücken des Behälters auf eine beliebige Oberflächenkontur diese Oberfläche durch den Behälter möglichst exakt nachgebildet wird.

In einer bevorzugten Ausführungsform weist der flexible Behälter eine Grundfläche in definierter Form auf, z.B. rechteckig, quadratisch oder sechseckig.

Um die Variabilität hinsichtlich der möglichen Anwendungen zu erhöhen, umfasst der Endeffektor in einer bevorzugten Ausführungsform zwei oder mehr aneinandergefügte flexible Behälter, die bevorzugt eine Grundfläche bzw. Begrenzungsfläche definierter Form aufweisen (z.B. rechteckig, quadratisch oder sechseckig). Durch die Grundfläche definierter Form lassen sich die flexiblen Behälter in effektiver Weise nebeneinander anordnen. Bevorzugt weisen die Grundflächen des jeweiligen flexiblen Behälters die gleiche Form auf, können sich aber in dem jeweiligen Flächeninhalt unterscheiden.

Durch diese modulare Bauweise lassen sich mit gleichbleibender Steuerung des Endeffektors unterschiedliche Grundflächen zusammenstecken und so auf verschiedene Halbzeug- und/oder Bauteilgrößen einfach anpassen.

Wie oben ausgeführt, umfasst der Endeffektor zumindest ein Arbeitselement zum Greifen und/oder Temperieren und/oder Kompaktieren, z.B. eines Halbzeugs oder Bauteils.

Geeignete Arbeitselemente zum Greifen, die in Endeffektoren zum Einsatz kommen können, sind dem Fachmann in Form von Greiferelementen grundsätzlich bekannt.

Beispielhaft können in diesem Zusammenhang Vakuum-, Nadel-, Eis-, Bernoulli-, Schwebe- oder Ultraschallgreifer genannt werden. Weiterhin ist möglich, magnetische und/oder induktive Effekte zum Greifen zu nutzen (Magnetgreifer).

Das Greiferelement bzw. die Greiferelemente sind bevorzugt so im Endeffektor angebracht, dass ein zu greifendes Halbzeug und/oder Bauteil in dem Bereich des flexiblen Behälters fixiert wird, in dem die Oberflächenkontur der Ablagefläche nachgebildet ist.

Bevorzugt sind die Greiferelemente an dem flexiblen Behälter befestigt bzw. in dessen Oberfläche eingelassen.

In einer bevorzugten Ausführungsform ist das Greiferelement, bevorzugt ein Vakuumgreiferelement, als flächiges Greiferelement ausgebildet.

Bevorzugt ist das flächige Greiferelement an der dem Halbzeug und/oder Bauteil bzw. der Ablagefläche zugewandten Seite des flexiblen Behälters angebracht. Je nach Größe des zu greifenden Halbzeugs und/oder Bauteils kann der Flächeninhalt des flächigen Greiferelements über einen breiten Bereich variieren. Der Flächeninhalt des flächigen Greiferelements kann z.B. im Bereich von 20 cm² bis 2 m² liegen.

In einer bevorzugten Ausführungsform ist das flächige Greiferelement mit einer Vakuumleitung verbunden und aus einem porösen bzw. luftdurchlässigen Material (z.B. einem Textilgewebe bzw. -gewirke, Abstandsgewebe, Abstandsgewirke) gefertigt, so dass beim Anlegen eines Vakuums an der Oberfläche des flächigen Greiferelements ein Sog erzeugt wird, durch den das zu greifende Halbzeug und/oder

Bauteil wie z.B. ein textiles Fasermaterial auf der Oberfläche des flächigen Greiferelements fixiert wird.

In einer bevorzugten Ausführungsform wird das flächige Greiferelement durch ein Abstandsgewebe bzw. -gewirke realisiert, welches bevorzugt auf der Oberfläche des flexiblen Behälters befestigt ist und mit einer Vakuumleitung verbunden ist.

Abstandsgewebe bzw. -gewirke sind dem Fachmann grundsätzlich bekannt. Üblicherweise umfassen sie zwei Gewebedecklagen, die durch abstandshaltende Stegfäden auf einem bestimmten Abstand gehalten werden.

Bevorzugt bringt das Abstandsgewebe eine gewisse Kompressionsbeständigkeit mit sich. Dadurch bleibt die Abformgenauigkeit erhalten. Durch Anlegen von Unterdruck bzw. Vakuum an das Abstandsgewebe wird auf der gesamten, leicht porösen bzw. luftdurchlässigen Oberfläche des Abstandsgewebes ein Sog erzeugt, der das zu greifende Halbzeug und/oder Bauteil festhält. Die Kompressionsbeständigkeit des Abstandsgewebes sorgt wiederum dafür, dass die Luftströmung im Inneren des Abstandsgewebes gleichmäßig ist und keine Bereiche vorliegen, an denen die Sogwirkung verloren geht.

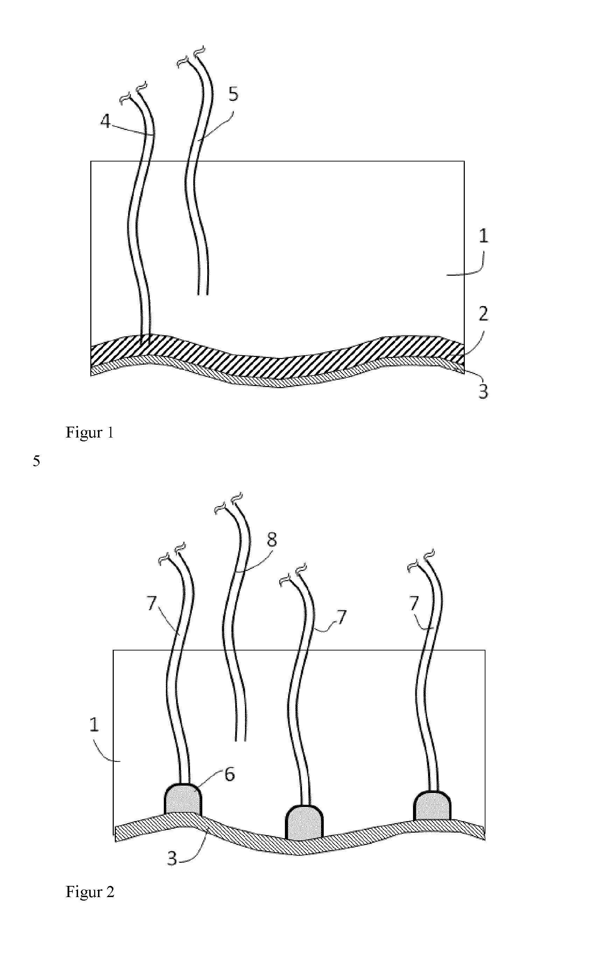

Ein flexibler Behälter, an dem ein flächiges Greiferelement angebracht ist, wird in Fig. 1 schematisch dargestellt. Der flexible Behälter 1 ist mit einer Vakuumleitung 5 verbunden. Als möglicher Füllstoff können z.B. Schaumstoffkügelchen verwendet werden. Der flexible Behälter ist bevorzugt gasdicht ausgestaltet, z.B. durch Auswahl geeigneter Wandungsmaterialien. An dem flexiblen Behälter 1 ist ein flächiges Greiferelement 2 angebracht. Dabei kann es sich z.B. um ein Abstandsgewebe handeln. Dieses Abstandsgewebe ist mit einer Vakuumleitung 4 verbunden. Die Vakuumleitungen 4 und 5 können unabhängig voneinander arbeiten. Wenn nun der Endeffektor so in Richtung der Ablagefläche einer Form bewegt wird, dass der flexible Behälter 1 mit ausreichendem Anpressdruck gegen diese Ablagefläche gepresst wird, wird die Oberflächenkontur der Ablagefläche in dem flexiblen Behälter 1 nachgebildet. Bevor der Endeffektor wieder von der Form wegbewegt wird, erfolgt das Anlegen eines Vakuums bzw. Unterdrucks in dem flexiblen Behälter 1 über die Vakuumleitung 5. Dies bewirkt ein Zusammenziehen des flexiblen Behälters 1 und die Schaumstoffkügelchen werden so stark kompaktiert, dass die Überführung vom fließfähigen in den starren Zustand bewirkt wird. Im starren Zustand kommt es zu einer dauerhaften Nachbildung der Oberflächenkontur in dem flexiblen Behälter 1 bzw. in dem auf dem Behälter angebrachten Abstandsgewebe 2. In diesem starren Zustand wird der Endeffektor zu dem zu greifenden Halbzeug und/oder Bauteil 3 bewegt. Bevorzugt handelt es sich um ein biegeschlaffes Halbzeug wie z.B. ein textiles Fasermaterial. Durch Anlegen eines Unterdrucks im Abstandsgewebe 2 wird auf dessen luftdurchlässiger Oberfläche ein Sog erzeugt, durch den das Halbzeug und/oder Bauteil 3 am flächigen Greiferelement (d.h. dem Abstandsgewebe) 2 fixiert wird.

Bei der Verwendung einer flächigen Greifereinheit, z.B. in Form eines Abstandsgewebes, kann es ausreichend sein, wenn der Endeffektor nur ein Greiferelement aufweist bzw. nur ein Greiferelement am flexiblen Behälter angebracht oder in dessen Oberfläche eingelassen ist.

Alternativ kann es bevorzugt sein, dass mehrere einzelne Greiferelemente (z.B. Vakuum-, Nadel-, Eis-, Bernoulli-, Schwebe-, Magnet- und/oder Ultraschallgreifer) am flexiblen Behälter befestigt oder in dessen Oberfläche eingelassen sind.

Die Steuerung der Greiferelemente ist bevorzugt von der Steuerung des flexiblen Behälters entkoppelt, so dass die Formung des flexiblen Behälters in einem Schritt erfolgt und dann unabhängig von diesem Vorbereitungsschritt die Greifprozesse stattfinden. Das Anlegen eines Vakuums an den mit dem Füllstoff befüllten flexiblen Behälter ist also nicht gleichzusetzen mit einem Vakuum an den Greiferelementen. In einer bevorzugten Ausführungsform können mehrere Greiferelemente (z.B. mindestens drei oder auch mindestens 4) in definierter Anordnung zueinander an dem flexiblen Behälter befestigt oder in dessen Oberfläche eingelassen sein. Dadurch wird ein definiertes Anordnungsmuster (z.B. dreieckig, quadratisch, etc.) ausgebildet und durch die rasterförmige Anordnung mehrerer Greiferelemente wird das zu greifende und transportierende Halbzeug und/oder Bauteil an mehreren Stellen gehalten. Je nach Halbzeug- und/oder Bauteilgröße kommen dabei unterschiedliche viele Greiferelemente zum Einsatz.

Eine mögliche Ausgestaltung der bevorzugten Ausführungsform mit mehreren diskreten, rasterförmig angeordneten Greiferelementen ist in Fig. 2 schematisch dargestellt. Der flexible Behälter 1 ist mit einer Vakuumleitung 8 verbunden. Als möglicher Füllstoff können z.B. Schaumstoffkügelchen verwendet werden. An dem flexiblen Behälter 1 sind mehrere diskrete, rasterförmig angeordnete Greiferelemente 6 angebracht. Dabei kann es sich z.B. um Vakuumgreifer handeln. Diese Vakuumgreifer 6 sind jeweils mit einer Vakuumleitung 7 verbunden. Die Vakuumleitungen 7 und 8 können unabhängig voneinander arbeiten. Wenn nun der Endeffektor so in Richtung der Ablagefläche einer Form bewegt wird, dass der flexible Behälter 1 mit ausreichendem Anpressdruck gegen diese Ablagefläche gepresst wird, wird die Oberflächenkontur der Ablagefläche in dem flexiblen Behälter 1 nachgebildet. Bevor der Endeffektor wieder von der Form wegbewegt wird, erfolgt das Anlegen eines Vakuums bzw. Unterdrucks in dem flexiblen Behälter 1 über die Vakuumleitung 8. Dies bewirkt ein Zusammenziehen des flexiblen Behälters 1 und die Schaumstoffkügelchen werden so stark kompaktiert, dass die Überführung vom fließfähigen in den starren Zustand bewirkt wird. Im starren Zustand kommt es zu einer dauerhaften Nachbildung der Oberflächenkontur in dem flexiblen Behälter 1. In diesem starren Zustand wird der Endeffektor zu dem zu greifenden Halbzeug und/oder Bauteil 3 bewegt. Bevorzugt handelt es sich um ein biegeschlaffes textiles Halbzeug wie z.B. ein textiles Fasermaterial. Durch Anlegen eines Unterdrucks bzw. Vakuums in den rasterförmig angeordneten Greiferelementen 6 wird das Halbzeug und/oder Bauteil 3 am flexiblen Behälter 1 fixiert.

Wie bereits oben erwähnt, kann der Endeffektor ein oder mehrere Heiz- und/oder Kühlelemente aufweisen. Diese sind bevorzugt an dem flexiblen Behälter befestigt oder in dessen Oberfläche eingelassen. Diese können ebenso rasterförmig als einzelne Heizelemente oder flächig, z.B. in Form von beheiz- bzw. temperierbaren Folien oder Schichten zwischen flexiblem Behälter und zu transportierendem Halbzeug angebracht sein.

In einer spezifischen Ausführungsform kann das oben beschriebene Abstandsgewebe mit temperierter Luft gespült werden und / oder ein luftdurchlässiges Gewebe mit Heizdrähten versehen auf dem Abstandsgewebe befestigt sein. Die Beheizung ist bevorzugt unabhängig von den Greiferelementen, d.h. der flexible Behälter kann nur mit einer Heizung, nur mit Greiferelementen oder auch in jeder Kombination aus Greifen und Temperieren eingesetzt werden.

Sofern die Zustandsänderung fließfähig→starr bzw. starr→fließfähig durch eine Temperaturänderung in dem flexiblen Behälter bewirkt wird, kann dies bevorzugt durch die oben beschriebenen Heiz- und/oder Kühlelemente erfolgen.

Bei einem bebinderten Halbzeug können die Heiz- und/oder Kühlelemente auch dazu eingesetzt werden, eine Binderaktivierung zu erzielen.

Bei einem Prepreg können die Heiz- und/oder Kühlelemente dazu eingesetzt werden, eine Vernetzungsreaktion zu unterdrücken.

Gemäß eines weiteren Aspekts der vorliegenden Erfindung wird ein Roboter bereitgestellt, der einen oder mehrere der oben beschriebenen Endeffektoren aufweist.

Wie allgemein üblich, kann der Endeffektor am Ende eines schwenkbaren Roboterarms befestigt sein. Als weitere bevorzugte Ausführungsform ist auch eine Portalbauweise möglich.

Gemäß eines weiteren Aspekts der vorliegenden Erfindung wird ein Verfahren zum Greifen, Temperieren und/oder Kompaktieren eines Halbzeugs und/oder Bauteils bereitgestellt, umfassend
- das Bereitstellen des oben beschriebenen Endeffektors, wobei sich der in dem flexiblen Behälter vorliegende Füllstoff in einem fließfähigen oder verformbaren Zustand befindet,
- das Anpressen des flexiblen Behälters an eine Ablagefläche einer Form oder eine Oberfläche eines Bauteils oder Halbzeugs, wobei der Anpressdruck ausreichend hoch ist, um die Oberflächenkontur der Ablagefläche oder des Bauteils oder Halbzeugs in dem flexiblen Behälter nachzubilden,
- das Überführen des Füllstoffs vom fließfähigen oder verformbaren Zustand in den starren oder formhaltigen Zustand, und
- das Greifen, Temperieren und/oder Kompaktieren des Halbzeugs oder Bauteils durch das Arbeitselement des Endeffektors.

Wie bereits oben erläutert, ermöglicht es das Verfahren unter Verwendung des erfindungsgemäßen Endeffektors, die Oberflächenkontur der Ablagefläche einer Form oder auch die Oberflächenkontur eines Bauteils oder Halbzeugs in dem flexiblen Behälter nachzubilden, indem der flexible Behälter gegen die Ablagefläche bzw. das Bauteil gepresst wird (d.h. Füllstoff in fließfähigem oder plastisch oder elastisch verformbaren Zustand) und anschließend diese im flexiblen Behälter nachgebildete Oberflächenkontur "einzufrieren" (Überführen des Füllstoffs in den starren bzw. formhaltigen Zustand). Anschließend kann z.B. ein mit Greiferelementen gegriffener Gegenstand wie z.B. ein textiles Gewebe oder ein Prepreg möglichst exakt auf der Ablagefläche der Form abgelegt werden. Soll der Endeffektor zu einem späteren Zeitpunkt für eine neue Ablagefläche mit anderer Oberflächenkontur eingesetzt werden, kann der Füllstoff wieder in einen fließfähigen bzw. elastisch oder plastisch verformbaren Zustand überführt werden, um die neue Oberflächenkontur nachzubilden, gefolgt von dem "Einfrieren" dieser nachgebildeten Oberflächenkontur, indem der Füllstoff wieder in den erstarrten Zustand geschaltet wird. Auch kann der Endeffektor nach dem "Einfrieren" der Oberflächenkontur eines Bauteils oder Halbzeugs dazu verwendet werden, dieses Bauteil bzw. Halbzeug möglichst gleichmäßig zu temperieren, z.B. durch Heizelemente, die auf der Oberfläche des flexiblen Behälters angebracht sind.

Wenn das Verfahren zum Greifen und Ablegen eines Halbzeugs und/oder Bauteils verwendet wird, umfasst es bevorzugt folgende Schritte:
- das Bereitstellen des oben beschriebenen Endeffektors, wobei sich der in dem flexiblen Behälter vorliegende Füllstoff in einem fließfähigen oder verformbaren Zustand befindet,
- das Anpressen des flexiblen Behälters an eine Ablagefläche einer Form, wobei der Anpressdruck ausreichend hoch ist, um die Oberflächenkontur der Ablagefläche nachzubilden,
- das Überführen des Füllstoffs vom fließfähigen oder verformbaren Zustand in den starren oder formhaltigen Zustand,
- das Greifen eines Halbzeugs oder Bauteils mit einem Greiferelement bzw. Greiferelementen, um das Halbzeug oder Bauteil im Bereich der nachgebildeten Oberflächenkontur der Ablagefläche zu fixieren,
- das Transportieren des Halbzeugs oder Bauteils zu der Form, und
- das Ablegen des Halbzeugs oder Bauteils in der Form.

In einer bevorzugten Ausführungsform handelt es sich bei dem Halbzeug um ein biegeschlaffes Material. Beispielhaft können in diesem Zusammenhang Prepreg, Preforms, Faserhalbzeug, textile Matten und /oder Bauteile genannt werden. Hinsichtlich der bevorzugten Merkmale des Endeffektors kann an dieser Stelle auf die obigen Ausführungen verwiesen werden.

Wie bereits oben erläutert, wird die Überführung des Füllstoffs vom fließfähigen in den starren Zustand (oder umgekehrt) durch eine geeignete äußere Einwirkung, z.B. durch Druckänderung wie Anlegen eines Unterdrucks oder Vakuums, Temperaturänderung, Änderung des elektrischen Feldes wie z.B. durch Anlegen einer Spannung, in dem flexiblen Behälter realisiert. Hinsichtlich bevorzugter Ausführungsformen kann auf die obigen Ausführungen verwiesen werden.

Bevorzugt ist das Greiferelement bzw. sind die Greiferelemente so an dem flexiblen Behälter befestigt bzw. in dessen Oberfläche eingelassen, dass das gegriffene Halbzeug und/oder Bauteil möglichst effizient in dem Bereich des flexiblen Behälters fixiert wird, in dem die Oberflächenkontur der Ablagefläche der Form nachgebildet ist.

Wie oben beschrieben, ermöglicht es die vorliegende Erfindung, dass zwischen einer weichen, d.h. verformbaren und einer zähen bzw. starren und formhaltigen Oberfläche der Greifereinheit variiert werden kann. Dadurch ergibt sich der Vorteil, dass mit nur einem Werkzeugsystem unterschiedliche Konturen und Komplexitätsgrade (unterschiedliche Halbzeug und/oder Bauteile oder verschiedene Schritte innerhalb eines Halbzeugs und/oder Bauteils) beim Handling biegeschlaffer Materialien bedient werden können. Weiterhin besteht die Möglichkeit, durch die Modularität des Systems unterschiedliche Halbzeug- und/oder Bauteilgrößen mit einem Werkzeugsystem zu bedienen. Für kleine Losgrößen oder Halbzeug und/oder Bauteile, die aus unterschiedlich großen Zuschnitten, Einzelpreforms oder Subkomponenten (Sandwichkerne, Inserts und andere) zusammengesetzt sind, entfällt damit die Anschaffung einzeln angepasster Werkzeuge. Dadurch ergibt sich ein großer Kostenvorteil.

Durch die Option, unterschiedliche Greifertypen zu kombinieren (z.B. Nadelgreifer und Vakuumgreifer etc.) können sich Qualitätssteigerungen in der Ablegegenauigkeit erzielen lassen. In einer der bevorzugten Ausführungsformen verhindert eine konturtreue flächige Aufnahme mittels Vakuum im Abstandsgewebe ein lokales Verrutschen und/oder einen Verzug im Faserhalbzeug bzw. in der Preform. Nadelgreifer können an Stellen für zusätzlichen Halt sorgen, wo beispielsweise Aufdickungen, Verstrebungen oder Anbauten vorzusehen sind und die Haltekraft des Vakuum allein nicht ausreichen würde.

Mit dem Einsatz von Vakuumspeichersystemen lassen sich sehr schnelle Legeprozesse realisieren, so dass eine Geschwindigkeitssteigerung, eine Steigerung der Durchsatzrate und damit schließlich der Produktivität ermöglicht wird.

Die Temperierbarkeit kann für chemische Vorgänge vorteilhaft sein. Beispielsweise kann über eine Beheizung eine Binderaktivierung, eine Teil- oder Durchreaktion eines Harzes und durch eine Kühlung andererseits das Unterdrücken einer Vernetzungsreaktion gesteuert werden.

## Patentansprüche

1. Ein Endeffektor, umfassend
- einen flexiblen Behälter (1), der einen Füllstoff enthält, wobei der Füllstoff zwischen einem fließfähigen oder verformbaren Zustand und einem starren oder formhaltigen Zustand schaltbar ist, und
- ein oder mehrere Arbeitselemente zum Greifen, Temperieren und/oder Kompaktieren,
wobei
der Endeffektor zumindest ein Schaltelement umfasst, das an dem flexiblen Behälter (1) angebracht oder in dessen Oberfläche eingelassen ist und das Schaltelement ausgewählt wird aus einer oder mehreren Vakuum- (4, 5) und/oder Belüftungsleitungen, einem oder mehreren Heiz- und/oder Kühlelementen, Elektroden, oder Kombinationen dieser Schaltelemente.

2. Der Endeffektor gemäß Anspruch 1, wobei der Füllstoff ausgewählt wird aus einem partikelförmigen Füllstoff, einer Flüssigkeit, oder Kombinationen davon.

3. Der Endeffektor gemäß Anspruch 1 oder 2, wobei der Füllstoff ausgewählt wird aus Schaumstoffpartikeln, einem Pulver, einer elektroviskosen Flüssigkeit, oder Kombinationen dieser Füllstoffe.

4. Der Endeffektor gemäß einem der vorstehenden Ansprüche, wobei der Befüllungsgrad des flexiblen Behälters (1) mit dem Füllstoff 30-100% beträgt.

5. Der Endeffektor gemäß einem der vorstehenden Ansprüche, wobei der Endeffektor zwei oder mehr aneinandergefügte flexible Behälter (1) umfasst, die jeweils eine Grundfläche definierter Form aufweisen.

6. Der Endeffektor gemäß einem der vorstehenden Ansprüche, wobei das Arbeitselement bzw. die Arbeitselemente an dem flexiblen Behälter (1) befestigt und/oder in dessen Oberfläche eingelassen sind.

7. Der Endeffektor gemäß einem der vorstehenden Ansprüche, wobei das Arbeitselement zum Greifen ein Greiferelement (2) ist, welches ausgewählt wird aus einem Vakuum-, Nadel-, Eis-, Bernoulli-, Schwebe-, Magnet- oder Ultraschallgreifer, oder Kombinationen dieser Greiferelemente (2).

8. Der Endeffektor gemäß einem der vorstehenden Ansprüche, wobei das Greiferelement (2) in Form eines Abstandsgewebes als flächiges Greiferelement (2) ausgebildet ist, das auf der Oberfläche des flexiblen Behälters (1) angebracht ist.

9. Der Endeffektor gemäß einem der vorstehenden Ansprüche, wobei das Arbeitselement zum Temperieren ein Heiz- und/oder Kühlelement ist.

10. Der Endeffektor gemäß einem der vorstehenden Ansprüche, wobei mehrere Arbeitselemente in definierter Anordnung zueinander an dem flexiblen Behälter (1) befestigt oder in dessen Oberfläche eingelassen sind.

11. Ein Roboter oder eine Portalanlage, einen oder mehrere Endeffektoren gemäß einem der Ansprüche 1-10 aufweisend.

12. Ein Verfahren zum Greifen, Temperieren und/oder Kompaktieren eines Halbzeugs und/oder Bauteils bereitgestellt, umfassend
- das Bereitstellen des Endeffektors gemäß einem der Ansprüche 1-10, wobei sich der in dem flexiblen Behälter (1) vorliegende Füllstoff in einem fließfähigen oder verformbaren Zustand befindet,
- das Anpressen des flexiblen Behälters (1) an eine Ablagefläche einer Form oder eine Oberfläche eines Bauteils oder Halbzeugs (3), wobei der Anpressdruck ausreichend hoch ist, um die Oberflächenkontur der Ablagefläche oder des Bauteils oder Halbzeugs (3) in dem flexiblen Behälter (1) nachzubilden,
- das Überführen des Füllstoffs vom fließfähigen oder verformbaren Zustand in den starren oder formhaltigen Zustand, und
- das Greifen, Temperieren und/oder Kompaktieren des Halbzeugs oder Bauteils (3) durch das Arbeitselement des Endeffektors.

13. Das Verfahren gemäß Anspruch 12 zum Greifen und Ablegen eines Halbzeugs und/oder Bauteils, umfassend:
- das Bereitstellen des Endeffektors gemäß einem der Ansprüche 1-10, wobei sich der in dem flexiblen Behälter (1) vorliegende Füllstoff in einem fließfähigen oder verformbaren Zustand befindet,
- das Anpressen des flexiblen Behälters (1) an eine Ablagefläche einer Form, wobei der Anpressdruck ausreichend hoch ist, um die Oberflächenkontur der Ablagefläche nachzubilden,
- das Überführen des Füllstoffs vom fließfähigen oder verformbaren Zustand in den starren oder formhaltigen Zustand,
- das Greifen eines Halbzeugs oder Bauteils (3) mit einem Greiferelement (2) bzw. Greiferelementen (2), um das Halbzeug oder Bauteil (3) im Bereich der nachgebildeten Oberflächenkontur der Ablagefläche zu fixieren,
- das Transportieren des Halbzeugs oder Bauteils (3) zu der Form, und
- das Ablegen des Halbzeugs oder Bauteils (3) in der Form.

14. Das Verfahren gemäß Anspruch 12 oder 13, wobei es sich bei dem Halbzeug und/oder Bauteil (3) um ein biegeschlaffes Halbzeug und/oder Bauteil (3) handelt.

15. Das Verfahren gemäß einem der Ansprüche 12-14, wobei das Überführen des Füllstoffs vom fließfähigen oder verformbaren Zustand in den starren oder formhaltigen Zustand durch Druckänderung, Temperaturänderung, Änderung des elektrischen Feldes, oder Kombinationen davon bewirkt wird.

## Claims

1. End effector, comprising
- a flexible container (1) which contains a filler, wherein the filler is switchable between a flowable or deformable state and a rigid or dimensionally stable state, and
- one or more working elements for gripping, temperature regulation and/or compaction,
wherein the end effector comprises at least one switching element which is attached to the flexible container (1) or is embedded in the surface thereof and the switching element is selected from one or more vacuum lines (4, 5) and/or ventilation lines, one or more heating and/or cooling elements, electrodes, or combinations of said switching elements.

2. End effector according to Claim 1, wherein the filler is selected from a particulate filler, a liquid, or combinations thereof.

3. End effector according to Claim 1 or 2, wherein the filler is selected from foam particles, a powder, an electroviscous liquid, or combinations of said fillers.

4. End effector according to one of the preceding claims, wherein the degree of filling of the flexible container (1) with the filler is 30-100%.

5. End effector according to one of the preceding claims, wherein the end effector comprises two or more flexible containers (1) which are joined to each other and each have a base of defined shape.

6. End effector according to one of the preceding claims, wherein the working element or the working elements are/is fastened to the flexible container (1) and/or embedded in the surface thereof.

7. End effector according to one of the preceding claims, wherein the working element for gripping is a gripper element (2) which is selected from a vacuum gripper, needle gripper, ice gripper, Bernoulli gripper, suspended gripper, magnetic gripper or ultrasonic gripper, or combinations of said gripper elements (2).

8. End effector according to one of the preceding claims, wherein the gripper element (2) in the form of a spacer fabric is designed as a sheet-like gripper element (2) which is attached on the surface of the flexible container (1).

9. End effector according to one of the preceding claims, wherein the working element for regulating the temperature is a heating and/or cooling element.

10. End effector according to one of the preceding claims, wherein a plurality of working elements are fastened to the flexible container (1) or are embedded in the surface thereof in a defined arrangement with respect to one another.

11. Robot or a portal system having one or more end effectors according to one of Claims 1-10.

12. Method provided for gripping, temperature-regulating and/or compacting a semi-finished product and/or component, comprising
- providing the end effector according to one of Claims 1-10, wherein the filler present in the flexible container (1) is in a flowable or deformable state,
- pressing the flexible container (1) onto a depositing surface of a mould or onto a surface of a component or semi-finished product (3), wherein the press-on pressure is of a magnitude sufficient in order to copy the surface contour of the depositing surface or of the component or semi-finished product (3) into the flexible container (1),
- transferring the filler from the flowable or deformable state into the rigid or dimensionally stable state, and
- gripping, temperature-regulating and/or compacting the semi-finished product or component (3) by the working element of the end effector.

13. Method according to Claim 12 for gripping and depositing a semi-finished product and/or component, comprising:
- providing the end effector according to one of Claims 1-10, wherein the filler present in the flexible container (1) is in a flowable or deformable state,
- pressing the flexible container (1) onto a depositing surface of a mould, wherein the press-on pressure is of a magnitude sufficient in order to copy the surface contour of the depositing surface,
- transferring the filler from the flowable or deformable state into the rigid or dimensionally stable state,
- gripping a semi-finished product or component (3) with a gripper element (2) or gripper elements (2) in order to fix the semi-finished product or component (3) in the region of the copied surface contour of the depositing surface,
- transporting the semi-finished product or component (3) to the mould, and
- depositing the semi-finished product or component (3) in the mould.

14. Method according to Claim 12 or 13, wherein the semi-finished product and/or component (3) is a pliant semi-finished product and/or component (3).

15. Method according to one of Claims 12-14, wherein the filler is transferred from the flowable or deformable state into the rigid or dimensionally stable state by changing the pressure, changing the temperature, changing the electrical field, or combinations thereof.

## Revendications

1. Effecteur terminal, comprenant :
- un récipient flexible (1) qui contient une matière de remplissage, la matière de remplissage pouvant être commutée entre un état coulant ou déformable et un état rigide ou conservant sa forme, et
- un ou plusieurs éléments de travail pour saisir, réguler la température et/ou compacter,
l'effecteur terminal comprenant au moins un élément de commutation qui est monté sur le récipient flexible (1) ou qui est incorporé dans sa surface et l'élément de commutation étant choisi parmi une ou plusieurs conduites sous vide (4, 5) et/ou conduites de ventilation, un ou plusieurs éléments chauffants et/ou de refroidissement, des électrodes, ou des combinaisons de ces éléments de commutation.

2. Effecteur terminal selon la revendication 1, dans lequel la matière de remplissage est choisie parmi une matière de remplissage particulaire, un liquide, ou des combinaisons de ceux-ci.

3. Effecteur terminal selon la revendication 1 ou 2, dans lequel la matière de remplissage est choisie parmi des particules de mousse, une poudre, un liquide électro-visqueux ou des combinaisons de ces matières de remplissage.

4. Effecteur terminal selon l'une quelconque des revendications précédentes, dans lequel le degré de remplissage du récipient flexible (1) avec la matière de remplissage est de 30-100 %.

5. Effecteur terminal selon l'une quelconque des revendications précédentes, dans lequel l'effecteur terminal comprend deux ou plus de deux récipients flexibles (1) assemblés les uns aux autres, qui présentent chacun une surface de base de forme définie.

6. Effecteur terminal selon l'une quelconque des revendications précédentes, dans lequel l'élément de travail ou les éléments de travail sont fixés sur le récipient flexible (1) et/ou sont incorporés dans sa surface.

7. Effecteur terminal selon l'une quelconque des revendications précédentes, dans lequel l'élément de travail pour saisir est un élément de préhension (2), qui est choisi parmi un dispositif de préhension à vide, un préhenseur à aiguilles, à glace, de Bernoulli, flottant, magnétique ou à ultrasons, ou des combinaisons de ces éléments de préhension (2).

8. Effecteur terminal selon l'une quelconque des revendications précédentes, dans lequel l'élément de préhension (2) est réalisé sous forme de tissu d'espacement en tant qu'élément de préhension plat (2) qui est monté sur la surface du récipient flexible (1).

9. Effecteur terminal selon l'une quelconque des revendications précédentes, dans lequel l'élément de travail pour réguler la température est un élément chauffant et/ou de refroidissement.

10. Effecteur terminal selon l'une quelconque des revendications précédentes, dans lequel plusieurs éléments de travail sont fixés dans un agencement défini les uns par rapport aux autres sur le récipient flexible (1) ou sont incorporés dans sa surface.

11. Robot ou installation de portique, présentant un ou plusieurs effecteurs terminaux selon l'une quelconque des revendications 1 à 10.

12. Procédé pour saisir, réguler la température de et/ou compacter un produit semi-fini et/ou un composant, comprenant :
- la fourniture de l'effecteur terminal selon l'une quelconque des revendications 1 à 10, la matière de remplissage présente dans le récipient flexible (1) se trouvant dans un état coulant ou déformable,
- le pressage du récipient flexible (1) sur une surface de dépose d'un moule ou une surface d'un composant ou d'un produit semi-fini (3), la pression d'application étant suffisamment élevée pour reproduire le contour de surface de la surface de dépose ou du composant ou du produit semi-fini (3) dans le récipient flexible (1),
- le transfert de la matière de remplissage de l'état coulant ou déformable dans l'état rigide ou conservant sa forme, et
- la préhension, la régulation de la température et/ou le compactage du produit semi-fini ou du composant (3) par l'élément de travail de l'effecteur terminal.

13. Procédé selon la revendication 12, pour saisir et déposer un produit semi-fini et/ou un composant, comprenant :
- la fourniture de l'effecteur terminal selon l'une quelconque des revendications 1 à 10, la matière de remplissage présente dans le récipient flexible (1) se trouvant dans un état coulant ou déformable,
- le pressage du récipient flexible (1) sur une surface de dépose d'un moule, la pression d'application étant suffisamment élevée pour reproduire le contour de surface de la surface de dépose,
- le transfert de la matière de remplissage de l'état coulant ou déformable dans l'état rigide ou conservant sa forme,
- la préhension d'un produit semi-fini ou d'un composant (3) avec un élément de préhension (2) ou des éléments de préhension (2), afin de fixer le produit semi-fini ou le composant (3) dans la région du contour de surface reproduit de la surface de dépose,
- le transport du produit semi-fini ou du composant (3) au moule, et
- la dépose du produit semi-fini ou du composant (3) dans le moule.

14. Procédé selon la revendication 12 ou 13, dans lequel le produit semi-fini et/ou le composant (3) est un produit semi-fini flexible et/ou un composant flexible (3).

15. Procédé selon l'une quelconque des revendications 12 à 14, dans lequel le transfert de la matière de remplissage de l'état coulant ou déformable dans l'état rigide ou conservant sa forme est réalisé par modification de la pression, modification de la température, variation du champ électrique, ou des combinaisons de celles-ci.
